# EUROPÄISCHE PATENTSCHRIFT

(11) **EP 2 936 746 B1**
(45) Veröffentlichungstag und Bekanntmachung des Hinweises auf die Patenterteilung: **03.04.2019**
(21) Anmeldenummer: 13814543.8
(22) Anmeldetag: 19.12.2013
(51) Int. Cl.: H04L 12/40, H04L 29/06, G06F 11/07

(54) **DATENÜBERTRAGUNGSPROTOKOLL MIT PROTOKOLLAUSNAHMEZUSTAND**
DATA TRANSMISSION PROTOCOL WITH PROTOCOL EXCEPTION STATE
PROTOCOLE DE TRANSMISSION DE DONNÉES AVEC ÉTAT D'EXCEPTION DE PROTOCOLE

(30) Priorität: 20.12.2012 DE 102012224031
(43) Veröffentlichungstag der Anmeldung: 28.10.2015
(73) Patentinhaber: Robert Bosch GmbH, 70442 Stuttgart (DE)
(72) Erfinder: HARTWICH, Florian, 72762 Reutlingen (DE)
(86) Internationale Anmeldenummer: PCT/EP2013/077524
(87) Internationale Veröffentlichungsnummer: WO 2014/096278

(56) Entgegenhaltungen:
- WO-A1-2012/136547
- "Road vehicles ? Controller area network (CAN) ? Part 1: Data link layer and physical signalling ; ISO+11898-1-2003", IEEE DRAFT; ISO+11898-1-2003, IEEE-SA, PISCATAWAY, NJ USA, Bd. msc.upamd, 18. November 2010 (2010-11-18), Seiten 1-52, XP017637056, [gefunden am 2010-11-18]
- Robert Bosch Gmbh: "CAN with Flexible Data-Rate Specification Version 1.0", , 17. April 2012 (2012-04-17), XP055047460, Gerlingen, Germany Gefunden im Internet: URL:http://can-newsletter.org/assets/files /ttmedia/raw/e5740b7b5781b8960f55efcc2b93e df8.pdf [gefunden am 2012-12-11]

## Beschreibung

### Stand der Technik

Die vorliegende Erfindung geht aus von einem Verfahren zum Austausch von Daten zwischen Teilnehmern, die mittels eines Bussystems miteinander verbunden sind, wobei die Nachrichten, die die Daten enthalten, gemäß einem ersten Kommunikationsprotokoll ausgetauscht werden, wobei die Nachrichten aus einer Sequenz von Bits bestehen und wenigstens ein Steuerbit mit einer vorgegebenen Position innerhalb der Nachricht, die gemäß dem ersten Kommunikationsprotokoll ausgetauscht wird, einen vorgegebenen Wert aufweisen muss, wobei für jede Nachricht ein Teilnehmer die Rolle des Senders innehat und wenigstens ein anderer Teilnehmer als Empfänger die Nachricht empfängt und eine Fehlerüberwachung für die Nachricht durchführt.

Ein derartiges Verfahren findet sich beispielsweise in Kommunikationscontrollern des Controller Area Network (CAN). Es wird beispielsweise in der BOSCH CAN-Spezifikation 2.0, die von der Robert Bosch GmbH Website http://www.semiconductors.bosch.de heruntergeladen werden kann, beschrieben. Das Bussystem ist hierbei üblicherweise ein Leitungspaar, wie etwa ein verdrilltes Kupferkabel. Das CAN-Protokoll ist beispielsweise in der Automobilindustrie, in der Industrieautomatisierung, oder auch in der Gebäudevernetzung weit verbreitet. Die im CAN-Protokoll zu übertragenden Nachrichten weisen einen Kopfteil, ein Datenfeld und einen Schlussteil auf, wobei die zu übertragenen Daten im Datenfeld enthalten sind. Der Kopfteil der Nachricht enthält ein Start-Of-Frame-Bit, ein Arbitration Field, sowie ein Control Field. Das Arbitration Field umfasst den Identifier, der die Priorität der Nachricht bestimmt. CAN unterstützt Identifier Längen von 11-Bit ("Standard Format" oder "Base Format") und 29-Bit ("Extended Format"). Das Control Field umfasst einen Data Length Code, der die Länge des Datenfeldes vorgibt. Der Schlussteil der Nachricht weist ein CRC Field, ein Acknowledge Field und ein End-Of-Frame Field auf. Dieses CAN-Protokoll wird im Folgenden als "Norm CAN" bezeichnet. Es werden über Norm CAN Bitraten bis zu 1 Mbit/s erreicht.

Die Rollen von Sender und Empfänger für die zu übertragenden Nachrichten werden unter den Teilnehmern durch ein Arbitrierungsverfahren anhand Informationen aus dem Kopfteil der Nachrichten vergeben. Arbitrierungsverfahren bedeutet in diesem Zusammenhang, dass anhand einer in der Nachricht enthaltenen Kennung ausgehandelt wird, welcher Teilnehmer Sendezugriff auf den Bus erhält, wenn mehrere Teilnehmer gleichzeitig versuchen, eine Nachricht zu senden, wobei bei eindeutig vergebenen Kennungen genau einem Teilnehmer der Sendezugriff durch das Arbitrierungsverfahren zuerkannt wird. Das für unsere Erfindung vorausgesetzte wenigstens eine Steuerbit ist bei CAN im Kopfteil enthalten und ist beispielsweise ein reserviertes Bit im Arbitration Field oder im Control Field, welches mit einem vorgegebenen Wert, beispielsweise stets dominant übertragen werden muss.

Viele andere Kommunikationssysteme kennen ähnliche reservierte Bits, die stets mit einem festen Wert übertragen werden. Im Folgenden wird die Erfindungsidee ausgehend von CAN dargestellt. Die Erfindung ist dadurch jedoch nicht auf CAN Bussysteme beschränkt, sondern kann ausgehend von allen Bussystemen ausgeführt werden, die die Merkmale des Oberbegriffes des beanspruchten Verfahrens erfüllen.

Die Einführung von immer stärker vernetzten Anwendungen, beispielsweise von Assistenzsystemen in Fahrzeugen, oder von vernetzten Steuersystemen in Industrieanlagen, führt zu der allgemeinen Anforderung, dass die Bandbreite für die serielle Kommunikation erhöht werden muss.

Zwei Faktoren begrenzen die effektive Datenrate in Norm CAN-Netzwerken, nämlich einerseits die Bitdauer, also die zeitliche Länge eines Bits, die durch die Funktion des CAN Busarbitrierungsverfahren nach unten begrenzt wird, und andererseits die Beziehung zwischen der Anzahl von Datenbits und Steuerbits, also nicht Nutzdaten enthaltenden Bits, in einer CAN-Nachricht.

Aus WO 2012/136547 A1 ist ein weiteres Protokoll bekannt, das "CAN with Flexible Data-Rate" oder CAN FD genannt wird. Dieses benutzt das vom CAN bekannte Busarbitrierungsverfahren, erhöht aber die Bitrate durch Umschalten auf eine kürzere Bitdauer nach dem Ende der Arbitrierung bis zum Bit CRC Delimiter. Die effektive Datenrate wird außerdem durch Zulassen längerer Datenfelder erhöht. Auch bei CAN FD handelt es sich um ein Verfahren zum Austausch von Daten zwischen Teilnehmern, die mittels eines Bussystems miteinander verbunden sind, wobei die Nachrichten, die die Daten enthalten, gemäß einem ersten Kommunikationsprotokoll ausgetauscht werden, wobei die Nachrichten aus einer Sequenz von Bits bestehen und innerhalb jeder Nachricht, die Daten enthält, wenigstens ein Steuerbit mit einer vorgegebenen Position innerhalb der Sequenz von Bits einen vorgegebenen Wert aufweisen muss.

CAN FD kann zur allgemeinen Kommunikation, aber auch in bestimmten Betriebsarten, beispielsweise für Software-Download oder End-of-Line-Programmierung oder für Wartungsarbeiten genutzt werden.

CAN FD erfordert zwei Sätze von Bittakt-Konfigurationsregistern, welche eine Bitdauer für die Arbitrierungsphase und eine weitere Bitdauer für die Datenphase definieren. Die Bitdauer zur Arbitrierungsphase hat die gleichen Einschränkungen wie in Norm CAN-Netzwerken, die Bitdauer für die Datenphase kann im Hinblick auf die Leistungsfähigkeit der gewählten Transceiver und die Anforderungen des CAN FD Netzwerks kürzer gewählt werden.

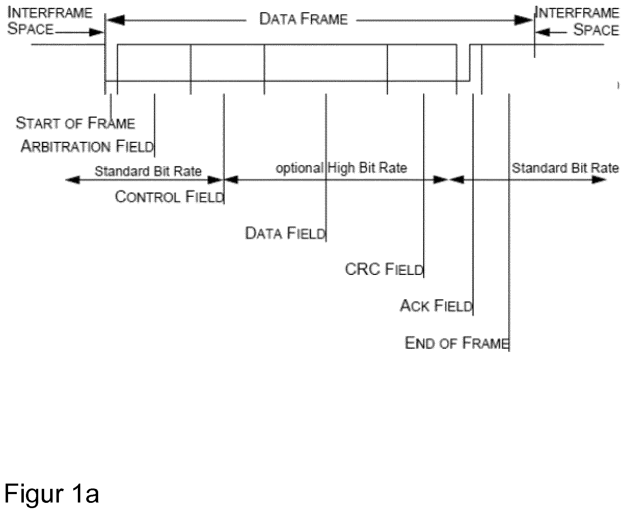

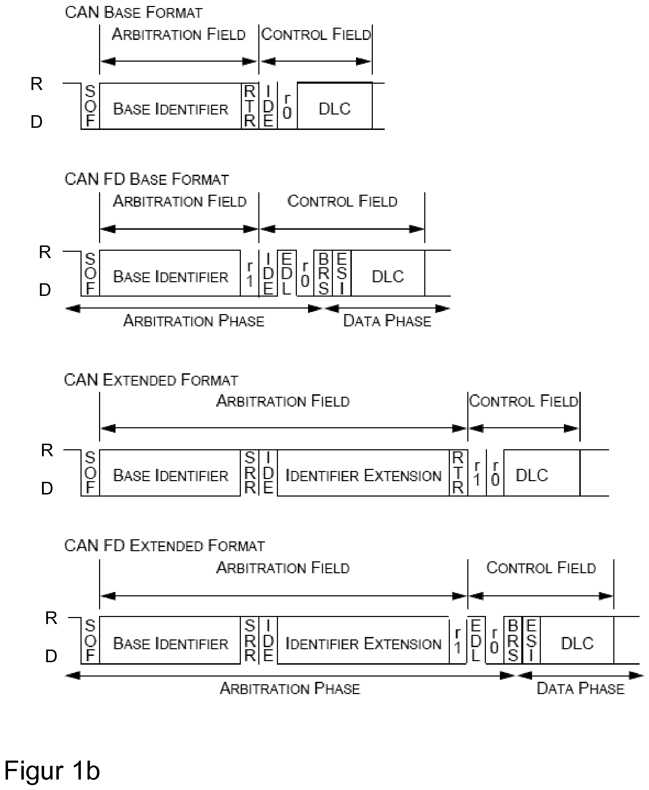

Eine CAN FD Nachricht besteht aus den gleichen Elementen wie eine Norm CAN-Nachricht, die sich jedoch im Detail unterscheiden. So können in einer CAN FD-Nachricht das Datenfeld und das CRC-Feld länger sein. Beispiele für Norm CAN- und CAN FD-Nachrichten sind in Abbildung 1 dargestellt.

CAN FD unterstützt beide Identifier Längen des CAN-Protokolls, das 11-Bit lange "Standard Format", das auch "Base Format" genannt wird, und das 29-Bit lange "Extended Format". CAN-FD Nachrichten haben die gleiche Struktur wie Norm CAN-Nachrichten. Die Unterscheidung zwischen Norm CAN-Nachrichten und CAN-FD Nachrichten erfolgt durch ein reserviertes Bit, welches im Norm CAN stets dominant übertragen wird, den Namen "r0" oder "r1" trägt und sich im Control Field vor dem Data Length Code befindet. In einer CAN FD Nachricht wird dieses Bit rezessiv übertragen und heißt EDL. Es folgen in den CAN FD-Nachrichten im Vergleich zu Norm CAN-Nachrichten zusätzliche Control Field Bits, z. B. das Bit BRS, welches die Position angibt, an der, sofern das BRS Bit einen entsprechenden Wert aufweist, die Bitdauer in einer CAN FD-Nachricht auf einen kürzeren Wert umgeschaltet wird. Dies ist in Figur 1a durch Pfeile dargestellt, die die Nachrichten aufteilen in einen Abschnitt mit der Bezeichnung "CAN FD Daten-Phase", in denen die hohe Bitrate bzw. die kurze Bitdauer verwendet wird, und in zwei Abschnitte mit dem Namen "CAN FD Arbitration-Phase", wo die niedrigere Bitrate bzw. die längere Bitdauer verwendet wird.

Die Anzahl der Bytes im Datenfeld wird durch den Data Length Code angezeigt. Dieser Code ist 4 Bit breit und wird im Control-Feld übertragen. Die Kodierung ist bei CAN FD anders als im Norm CAN. Die ersten neun Codes (0x0000 bis 0x1000) sind die gleichen, aber die folgenden Codes (0x1001 bis 0x1111) korrespondieren zu größeren Datenfeldern der CAN FD-Nachrichten, beispielsweise 12, 16, 20, 24, 32, 48 und 64 Bit.

Norm CAN-Transceiver können für CAN FD verwendet werden, spezielle Transceiver sind optional und können gegebenenfalls zu einer weiteren Steigerung der Bitrate in der Datenphase beitragen.

Das CAN FD-Protokoll ist in einer Protokoll-Spezifikation mit dem Titel "CAN with Flexible Data-Rate Specification", im folgenden bezeichnet als die CAN FD Spezifikation, beschrieben, die auf der Robert Bosch GmbH Website http://www.semiconductors.bosch.de heruntergeladen werden kann.

Solange unmodifizierte Norm CAN-Controller verwendet werden, kann ein gemischtes Netzwerk von Norm CAN-Teilnehmern und CAN FD-Teilnehmern nur im Norm CAN-Format kommunizieren. Das heißt, alle Teilnehmer im Netzwerk müssen einen CAN-FD-Protokoll-Controller aufweisen, um CAN FD-Kommunikation durchzuführen. Alle CAN FD-Protokoll-Controller sind jedoch in der Lage, sich an Norm CAN-Kommunikation zu beteiligen.

Eine Ursache für dieses Zurückfallen auf die langsamere Kommunikation in gemischten Netzwerken ist die Überwachung der Kommunikation durch die Kommunikations-Teilnehmer, die für die hohe Übertragungssicherheit beispielsweise in CAN-Bussystemen mitverantwortlich ist. Da die unmodifizierten Norm CAN-Controller die schnelleren Datenbits der CAN FD-Nachrichten nicht korrekt empfangen können, würden sie diese Nachrichten durch Fehlernachrichten (so genannte Error-Frames) zerstören. In ähnlicher Weise würden CAN FD-Controller Nachrichten durch Error-Frames zerstören, die nach erfolgter Arbitrierung beispielsweise unter Nutzung einer nochmals gegenüber der CAN FD-Spezifikation verkürzten Bitdauer oder unter Nutzung einer anderen Bitcodierung oder eines abweichenden Protokolls zu übertragen versuchen würden. Die Übertragungsrate kann also im Allgemeinen durch einen der langsameren Teilnehmer im Netzwerk, beziehungsweise durch dessen Überwachungsmechanismus, begrenzt werden.

Insbesondere dann, wenn eine Datenübertragung zwischen zwei bestimmten Teilnehmern erfolgen soll, welche für ein abweichendes, zum Beispiel schnelleres Kommunikationsprotokoll eingerichtet sind, ist diese Begrenzung nicht immer notwendig und kann nachteilig sein, insbesondere, wenn auf die Überwachungsmechanismen, welche zur Zerstörung der abweichenden oder schnelleren Nachrichten führen würden, bei diesem abweichenden Kommunikationsprotokoll verzichtet werden kann.

Zumindest in bestimmten Anwendungsfällen können also wesentlich höhere Übertragungsraten erzielt werden, wenn der Überwachungsmechanismus, der die Zerstörung der Nachrichten durch Error-Frames bewirkt, unter bestimmten Voraussetzungen durch geeignete Mechanismen ausgesetzt wird.

### Offenbarung der Erfindung

Die vorliegende Erfindung stellt ein Verfahren bereit, das diesen Nachteil behebt, indem ein Umschalten auf eine schnellere oder anderweitig modifizierte Kommunikation unter Nutzung der Leitungen eines vorhandenen Bussystems ermöglicht wird, ohne dass die schneller übertragenen Nachrichten durch andere Busteilnehmer zerstört werden.

### Vorteile der Erfindung

Gegenstand der vorliegenden Erfindung ist ein Verfahren gemäß dem Anspruch 1 und eine Vorrichtung gemäß dem Anspruch 9. Die abhängigen Ansprüche definieren Ausführungsbeispiele. Im Verfahren werden Daten zwischen Teilnehmern ausgetauscht, die mittels eines Bussystems miteinander verbunden sind, wobei Nachrichten, die die Daten enthalten, gemäß einem ersten Kommunikationsprotokoll ausgetauscht werden, wobei die Nachrichten aus einer Sequenz von Bits bestehen, wobei wenigstens ein Steuerbit mit einer vorgegebenen Position innerhalb der Nachricht, die gemäß dem ersten Kommunikationsprotokoll ausgetauscht wird, einen vorgegebenen Wert aufweisen muss, wobei für jede Nachricht ein Teilnehmer die Rolle des Senders innehat und wenigstens ein anderer Teilnehmer als Empfänger die Nachricht empfängt und eine Fehlerüberwachung für die Nachricht durchführt. Das Verfahren ist dadurch gekennzeichnet, dass bei Vorliegen wenigstens eines Steuerbits mit einem von dem vorgegebenen Wert abweichenden Wert wenigstens ein Empfänger einen Protokollausnahmezustand einnimmt, in dem er die Fehlerüberwachung aussetzt, bis eine Wiederaufnahmebedingung für die Nutzung des ersten Kommunikationsprotokolls erfüllt ist. Geht man davon aus, dass das Steuerbit mit abweichendem Wert signalisiert, dass die Kommunikation auf der Busleitung nicht gemäß dem ersten Kommunikationsprotokoll abläuft, sondern die Busleitung für einen anderen Zweck genutzt werden soll, so kann durch das erfindungsgemäße Verhalten der Vorteil erzielt werden, dass die Fehlerüberwachung des wenigstens einen Empfängers nicht die Verwendung für einen anderen Zweck stört oder verhindert.

In einer vorteilhaften Ausführungsform zeigt das Vorliegen des wenigstens einen Steuerbits mit einem von dem vorgegebenen Wert abweichenden Wert an, dass der Sender die von ihm übertragene Nachricht unter Nutzung eines abweichenden Kommunikationsprotokolls sendet. Durch das Einnehmen des Protokollausnahmezustands durch den wenigstens einen Empfänger wird dann verhindert, dass dieser Empfänger die Nachricht, die gemäß dem abweichendem Kommunikationsprotokoll übertragen wird, durch seine Fehlerüberwachung oder daraus abgeleitete Maßnahmen wie z.B. Error-Frames zerstört.

In einer besonders vorteilhaften Ausführungsform weist das abweichende Kommunikationsprotokoll in einem Teil der übertragenen Nachricht eine gegenüber dem ersten Kommunikationsprotokoll kürzere Bitdauer auf. Dies kann beispielsweise dann der Fall sein, wenn es sich bei der übertragenen Nachricht um eine gemäß CAN FD-Protokoll übertragene Nachricht handelt. Diese Ausführungsform ermöglicht die Übertragung von Daten durch den Sender mit einer höheren Datenrate, beziehungsweise in kürzerer Zeit.

Vorteilhaft ist es auch, wenn der wenigstens eine Empfänger den Protokollausnahmezustand einnimmt, indem er einen Neustart einer Protokollsteuereinheit oder einer Protokollzustandsmaschine durchführt. Ein solcher Mechanismus ist üblicherweise ohnehin in den Protokollimplementierungen vorgesehen und somit kann das erfindungsgemäße Verfahren mit verhältnismäßig geringem Aufwand ausgehend von einer Implementierung, welche das erste Kommunikationsprotokoll beherrscht, dargestellt werden.

Als Wiederaufnahmebedingung für die Nutzung des ersten Kommunikationsprotokolls wird vorteilhafterweise eine vorgegebene oder vorgebbare Anzahl von Bits mit vorgegebenen Werten definiert, oder eine vorgegebene oder vorgebbare Dauer ausbleibender Kommunikation auf dem Bus festgelegt. Insbesondere kann der wenigstens eine Empfänger nach dem Neustart das Eintreten der Wiederaufnahmebedingung unter Nutzung einer Flankenerkennung und eines Zählers für das Auftreten von Bits mit einem vorgegebenen Wert überwachen, wobei der Zähler bei Auftreten einer Flanke neu gestartet wird. Dies verringert den Aufwand zur Umsetzung des Verfahrens ausgehend von einer Implementierung, welche das erste Kommunikationsprotokoll beherrscht, weiter, da die Teilnehmer sich üblicherweise auf diese Weise nach einem fehlerbedingten Neustart oder zu Beginn der Datenübertragung auf die Buskommunikation aufsynchronisieren. Vorteilhafterweise weisen die gemäß dem ersten Kommunikationsprotokoll zu übertragenden Nachrichten einen Kopfteil, ein Datenfeld und einen Schlussteil auf, wobei die zu übertragenen Daten im Datenfeld enthalten sind und das wenigstens eine Steuerbit im Kopfteil enthalten ist. Dadurch kann frühzeitig innerhalb der Nachricht nach Lesen des Steuerbits der Protokollausnahmezustand eingenommen werden und gegebenenfalls der Sender auf ein abweichendes Kommunikationsprotokoll umschalten.

Sofern die Rollen von Sender und Empfänger unter den Teilnehmern durch ein Arbitrierungsverfahren vergeben werden, wobei anhand einer im Kopfteil der Nachricht enthaltenen Kennung festgelegt wird, welcher Teilnehmer Sendezugriff auf den Bus erhält, wenn mehrere Teilnehmer gleichzeitig versuchen, eine Nachricht zu senden, ist in vorteilhafter Weise sichergestellt, dass keine Kollisionen in der Buskommunikation auftreten. Insbesondere kann dies dadurch erreicht werden, dass das Arbitrierungsverfahren gemäß dem CAN-Standard ISO 11898-1 ausgeführt wird und der Kopfteil der Nachricht ein Start-Of-Frame-Bit, ein Arbitration Field, ein Control Field umfasst und der Schlussteil der Nachricht ein CRC Field, ein Acknowledge Field und ein End-Of-Frame Field aufweist.

Eine Vorrichtung, die geeignete Mittel zur Ausführung eines Verfahrens aufweist, wie es Gegenstand von Anspruch 1 oder eines davon abhängigen Unteranspruchs ist, weist die entsprechenden Vorteile auf. Insbesondere kann eine derartige Vorrichtung vorteilhafterweise in gemischten Netzwerken zum Einsatz kommen und dort zur schnellen und reibungslosen Datenübertragung beitragen, indem sie die Nutzung der Busleitungen für einen anderen Zweck nicht stört, beziehungsweise Nachrichten, welche ein Sender unter Nutzung eines abweichenden Kommunikationsprotokolls versendet, nicht durch einen ungerechtfertigten Überwachungsmechanismus stört oder zerstört.

### Zeichnungen

Die Figur 1a stellt die gemeinsame Grundstruktur von Norm CAN- und CAN-FD-Nachrichten dar. Die Abfolge und die Bezeichnungen der Nachrichtenabschnitte (Start-Of-Frame-Bit, Arbitration Field, Control Field, Data Field, CRC Field, ein Ack Field und End-Of-Frame Field) sind angegeben. Vor und nach der Nachricht befindet sich der Bus im Zustand ohne Datenübertragung, was durch den Begriff "Interframe Space" bezeichnet wird. Es werden in der Regel die englischen Bezeichnungen verwendet, wie sie im Standard ISO 11898 festgelegt sind. Die Bitratenumschaltung, die bei CAN FD-Nachrichten erfolgen kann, ist durch Abschnitte mit "Standard Bit Rate" und mit "optional High Bit Rate" eingezeichnet.

Die Figur 1b stellt den Kopfteil, umfassend Start-Of-Frame-Bit, Arbitration Field und Control Field, von Nachrichten gemäß Norm CAN-Protokoll und CAN FD-Protokoll dar, jeweils im Standard- bzw. Base-Format und im Extended Format. In der DATA-Phase kann eine Bitratenumschaltung bei CAN FD-Nachrichten erfolgen.

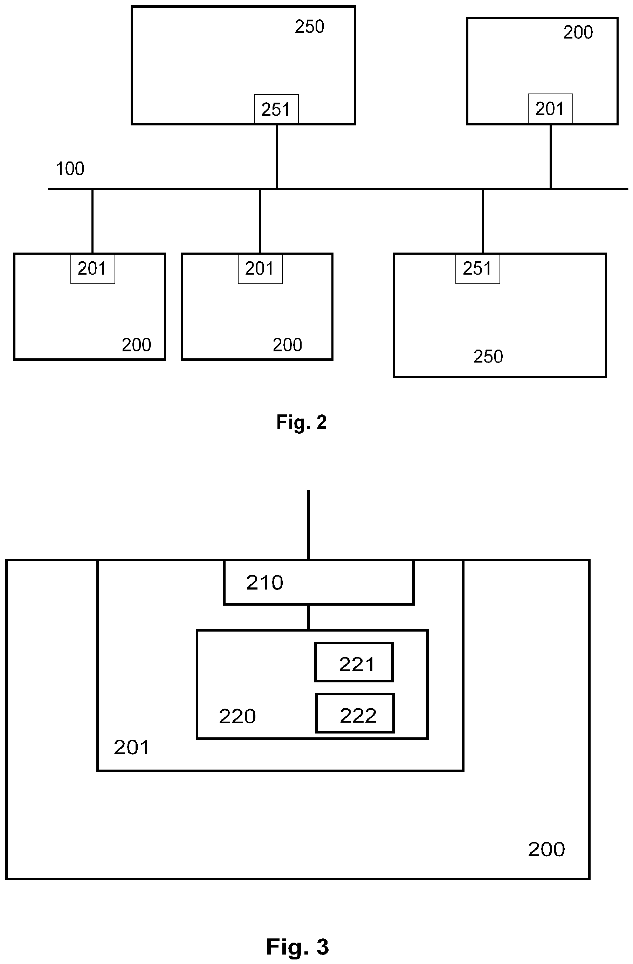

Figur 2 zeigt ein gemischtes Netzwerk aus ersten Teilnehmern 200 und zweiten Teilnehmern 250. Die Teilnehmer sind über ein Bussystem 100 verbunden, welches beispielsweise als zweiadrige Kupferleitung ausgebildet sein kann. Die Leitungsenden können beispielsweise durch geeignete Abschlusswiderstände abgeschlossen werden, um Reflexionen der Nachrichten zu vermeiden. Es sind auch andere Leitungstopologien, wie z.B. ringförmige, sternförmige, oder baumartige Topologien denkbar. Die ersten und zweiten Teilnehmer sind durch erste und zweite Schnittstellen 201, 251 mit dem Bussystem verbunden. Die Schnittstellen umfassen beispielsweise Busanschlusseinheiten wie z.B. CAN-Transceiver und Kommunikationseinheiten wie z.B. CAN-Controller oder CAN FD-Controller. Die Schnittstellen können auch ganz oder teilweise mit weiteren Bauelementen der Teilnehmer integriert dargestellt sein. Eine übliche Kombination ist beispielsweise die Integration der Kommunikationseinheit in einen ebenfalls vorhandenen Mikroprozessor des Teilnehmers.

Die ersten Teilnehmer zeichnen sich dadurch aus, dass sie erfindungsgemäß den Protokollausnahmezustand einnehmen können, während die zweiten Teilnehmer sich dadurch auszeichnen, dass sie ein zweites Kommunikationsprotokoll verwenden oder auf ein zweites Kommunikationsprotokoll umschalten können. Es können auch weitere Teilnehmer am Netzwerk angeschlossen werden, sofern sie das beschriebene Verfahren nicht stören. Einige der in Figur zwei dargestellten Teilnehmer können auch optionale Teilnehmer sein, die nur in bestimmten Fällen, zum Beispiel bei Wartungsarbeiten oder bei Programmierarbeiten angeschlossen werden.

Figur 3 zeigt beispielhaft ein schematisches Blockschaltbild eines ersten Teilnehmers 200, mit einer Schnittstelle 201. Die Schnittstelle umfasst eine Busanschlusseinheit 210, sowie einen Kommunikationscontroller 220, welcher zur Ausführung des erfindungsgemäßen Verfahrens eingerichtet ist. Der Kommunikationscontroller 220 enthält hierzu einen Zähler 221 und eine Flankenerkennung 222.

Im Folgenden werden mehrere Ausführungsbeispiele beschrieben, bei welchen die ersten Teilnehmer und die zweiten Teilnehmer jeweils unterschiedliche Kommunikationsprotokolle verwenden.

### Ausführungsbeispiele der Erfindung

### Beispiel 1: Toleranz von CAN-Implementierungen gegenüber CAN FD-Nachrichten

Ein Beispiel für eine Ausführungsform der vorliegenden Erfindung, die von einem Norm CAN-Netzwerk ausgeht, wird im Folgenden anhand der Figuren 2 und 3 dargestellt. In diesem Fall sind die ersten Teilnehmer 200 des in Figur 2 dargestellten Netzwerkes beispielsweise Steuergeräte, welche eine erfindungsgemäße Vorrichtung, also wie in Figur 3 dargestellt als Teil einer Schnittstelle 201 einen Kommunikationscontroller 220 mit einer modifizierten Norm CAN-Implementierung aufweisen. Die Norm CAN-Implementierung ist derartig modifiziert, dass sie das erfindungsgemäße Verfahren ausführt. Die zweiten Teilnehmer 250 des in Figur 2 dargestellten Netzwerkes sind hier beispielsweise Steuergeräte, welche einen Kommunikationscontroller mit einer CAN FD-Implementierung aufweisen.

Mit Implementierungen sind hardwaremäßige oder softwaremäßige Realisierungen des Kommunikationsprotokolls gemeint, also beispielsweise CAN-Kommunikationscontroller oder IP-Module, die einen CAN-Kommunikationscontroller beinhalten und in einem größeren Halbleiterbaustein integriert werden können.

Durch die erfindungsgemäße Modifikation werden Norm CAN-Implementierungen, die also definitionsgemäß nicht zum Senden und Empfangen von CAN FD-Nachrichten in der Lage sind, in die Lage versetzt, eine nach einem zweiten, abweichenden Kommunikationsprotokoll ausgeführte Kommunikation zu tolerieren. In der hier dargestellten Ausführungsform ist dieses zweite, abweichende Kommunikationsprotokoll CAN FD. Das Tolerieren des abweichenden Kommunikationsprotokolls bedeutet, dass diese erfindungsgemäß modifizierten Norm CAN-Implementierungen die nach dem zweiten Kommunikationsprotokoll, also in diesem Fall CAN FD, ablaufende Kommunikation ignorieren und nicht stören, indem sie beispielsweise Error-Frames erzeugen. Dies hat den Vorteil, dass eine Umschaltung von dem Norm CAN-Protokoll auf das schnellere zweite Protokoll, also CAN FD, ermöglicht wird, und zwar unter Verwendung der gleichen Busadern. Nach Abschluss der schnellen Kommunikation gemäß dem zweiten Kommunikationsprotokoll CAN FD erfolgt eine Rückumschaltung auf das ursprüngliche Norm-CAN Protokoll, sofern eine Wiederaufnahmebedingung für die Nutzung des ersten Kommunikationsprotokolls, also Norm CAN, erfüllt ist.

Für die vorliegende Erfindung werden in dem hier beschriebenen Ausführungsbeispiel zwei vorhandene Funktionen des CAN-Protokolls kombiniert, um die so modifizierten Norm CAN-Implementierungen CAN FD tolerant zu machen. Zum einen wird ein Zähler 221 genutzt, der in Norm CAN-Implementierungen vorgesehen ist, um das Auftreten von elf aufeinanderfolgenden rezessiven Bits zu detektieren, wenn eine Norm CAN-Implementierung sich auf die Bus-Kommunikation aufsynchronisiert. Dies geschieht im Norm CAN beispielsweise nach einem Neustart oder beim Durchlaufen einer so genannten "Bus Off Recovery Sequenz" (siehe Kapitel 7 "Fault Confinement" der CAN Specification 2.0, Regel 12). Zweitens wird die Flankenerkennung 222 benutzt, die den CAN-Bus-seitigen Eingang einmal pro CAN-Bus-Zeiteinheit auf Flanken überprüft, um detektierte Flanken als Grundlage für die Bit-Synchronisation heranzuziehen. (Die Länge eines Bits besteht beim CAN-Bus aus mehreren, beispielsweise zwischen 8 und 25 CAN-Bus-Zeiteinheiten oder "Time Quanta", deren Länge wiederum vom internen Oszillatortakt des jeweiligen Busteilnehmers abgeleitet wird. Details sind der CAN-Spezifikation 2.0 zu entnehmen.)

Eine gemäß dem hier beschriebenen Beispiel der vorliegenden Erfindung modifizierte CAN-Implementierung verwendet folgenden Mechanismus: Die modifizierte CAN-Implementierung beteiligt sich zunächst wie üblich an der Kommunikation, das heißt sie versucht, sofern eine Nachricht zum Versenden vorliegt, durch Senden des Kopfteils der Nachricht im Rahmen der Arbitirierung Zugriff auf den Bus zu erlangen. Gibt es nichts zu senden, oder verliert sie die Arbitirierung, beobachtet sie den Busverkehr als Empfänger. Unmittelbar nach Erkennen eines rezessiven Bits an der Bitposition r0 in einer empfangenen Norm CAN-Nachricht mit Standard-Format, oder nach Erkennen eines rezessiven Bits an der Bitposition r1 in einer empfangenen Norm CAN-Nachricht mit extended Format (entsprechend der Position der EDL Bit einer CAN FD Nachricht, siehe Figuren 1a und 1b) startet die modifizierte Norm CAN-Implementierung ihre für die Protokolldekodierung zuständige Zustandsmaschine (Protokollzustandsmaschine) beziehungsweise die dafür vorgesehene Protokollsteuereinheit, beispielsweise ein in Hardware realisiertes Protokollsteuerwerk, neu, ohne ihre Fehler-Zähler zu ändern und ohne einen Error-Frame zu senden. Auf diese Weise nimmt sie einen Protokollausnahmezustand ein, in welchem sie auf das Eintreten einer Wiederaufnahmebedingung wartet. Bei Eintreten der Wiederaufnahmebedingung wird ein Wiederaufnahmeprozess durchlaufen, wie im Folgenden näher beschrieben wird.

Alternativ kann an Stelle des r0 Bits bei Standard-Format beziehungsweise an Stelle des r1 Bits bei Extended-Format für die Einleitung des Protokollausnahmezustands auch ein anderes Bit mit festgelegtem Wert innerhalb der Norm CAN-Nachricht verwendet werden, wie z.B. das r0 Bit im Extended Format.

### Protokollausnahmezustand:

Im Protokollausnahmezustand wird zuerst ein Neustart der Protokollzustandsmaschine oder der Protokollsteuereinheit durchgeführt. Nach dem Neustart wartet der Teilnehmer unter Nutzung des dafür vorgesehenen Zählers 221, welcher Bits mit einem vorgegebenen Wert zählt, auf eine Folge von in diesem Beispiel elf aufeinander folgenden rezessiven Bits. Es darf keine rezessiv zu dominant Flanke innerhalb dieser Folge auftreten, andernfalls startet der Zähler 221 neu. Dies wird durch die vorhandene Flankenerkennung 222 überwacht.

### Wiederaufnahmeprozess:

Wenn beispielsweise unter Nutzung des Zählers 221 und der Flankenerkennung 222 die Wiederaufnahmebedingung, im vorliegenden Beispiel also eine Folge von elf aufeinander folgenden rezessiven Bits erkannt wird, verlässt der Teilnehmer den Protokollausnahmezustand und synchronisiert sich auf die Bus-Kommunikation. Damit ist der Teilnehmer wieder bereit für das Senden oder Empfangen von Norm CAN-Nachrichten, deren Beginn durch ein dominantes START OF FRAME-Bit signalisiert wird.

Der Vorteil des dargestellten Mechanismus ist, dass so sichergestellt ist, dass die modifizierten Norm CAN-Teilnehmer warten, bis die CAN FD-Nachricht übertragen wurde (oder bis sie durch einen Error-Frame unterbrochen wurde, falls ein Fehler durch einen CAN FD-Teilnehmer erkannt wird). Denn während der Übertragung der CAN FD-Nachricht wird das Erfordernis einer Folge von elf aufeinanderfolgenden rezessiven Bits nie erfüllt und die modifizierten Norm CAN-Teilnehmer durchlaufen keinen Wiederaufnahmeprozess, wie er oben beschrieben wurde. So ermöglicht das beschriebene Verfahren, dass die modifizierten Norm CAN-Implementierungen alle CAN FD-Nachrichten tolerieren.

Es ist vorteilhaft, dass die Bitdauer innerhalb der DATA-Phase der CAN FD-Nachricht (siehe Abbildung 2) nicht kürzer als eine CAN-Bus-Zeiteinheit der CAN FD Arbitration-Phase. Sonst könnte es auftreten, dass elf aufeinander folgende rezessive Bits durch den modifizierten Norm CAN-Teilnehmer in einer CAN FD-Nachricht in seltenen Fällen zufällig ausgelesen werden.

Die Detektion einer CAN FD-Nachricht verursacht kein Inkrement der Fehlerzähler, so dass wird die modifizierten Norm CAN-Implementierungen unmittelbar nach dem Ende der schnelleren CAN FD-Nachricht die Buskommunikation gemäß Norm-CAN-Protokoll fortsetzen können.

### Beispiel 2: Toleranz von modifizierten CAN FD-Implementierungen gegenüber Nachrichten gemäß weiterentwickelten Protokollen

Ein weiteres Beispiel für eine Ausführungsform der vorliegenden Erfindung, die von einem CAN FD-Netzwerk ausgeht, ist im Folgenden, wiederum unter Bezugnahme auf die Figuren 2 und 3, dargestellt. In diesem Fall sind die ersten Teilnehmer 200 des in Figur 2 dargestellten Netzwerkes beispielsweise Steuergeräte, welche eine erfindungsgemäße Vorrichtung, also wie in Figur 3 dargestellt als Teil einer Schnittstelle 201 einen Kommunikationscontroller 220 mit einer modifizierten CAN FD-Implementierung, die ein erfindungsgemäßes Verfahren ausführt, aufweisen. Die zweiten Teilnehmer 250 des in Figur 2 dargestellten Netzwerkes sind in diesem Beispiel Steuergeräte, welche einen Kommunikationscontroller aufweisen, der eine Implementierung eines weiteren Kommunikationsprotokolls enthält. Das weitere Kommunikationsprotokoll kann beispielsweise eine Weiterentwicklung des CAN FD-Protokolls sein, welche beispielsweise in Abhängigkeit vom Inhalt des Data Length Code noch längere Datenfelder zulässt, als im CAN FD vorgesehen sind. Weiterhin sind zusätzliche Steuerbits im Control Field vorstellbar, beispielsweise zum Zweck der Datenabsicherung, oder um zusätzliche Zustandsinformationen unter den Teilnehmern zu übertragen. Alternativ oder zusätzlich kann das weitere Kommunikationsprotokoll eine modifizierte Berechnung für den Inhalt des CRC Field und / oder eine abweichende Größe des CRC Field vorsehen.

Auch das CAN FD Protokoll gemäß der veröffentlichten Spezifikation, weist an einigen vorgegebenen Positionen innerhalb der Nachricht Bits mit vorgegebenen Werten auf. Wie in Figur 1b dargestellt enthält beispielsweise eine CAN FD Nachricht im Standard-Format und auch im Extended-Format je ein reserviertes Bit r1 als letztes Bit im Arbitration Field und ein reserviertes Bit r0, welches auf das EDL-Bit folgt, im Control Field.

Dementsprechend kann der Mechanismus, der oben für modifizierte Norm CAN-Implementierungen beschrieben wurde, analog auf modifizierte CAN FD-Implementierungen angewendet werden. Die modifizierten CAN FD-Implementierungen müssen hierzu die beiden Mechanismen enthalten, welche hierfür benutzt werden, nämlich einerseits den Zähler 221 für in diesem Beispiel elf aufeinanderfolgende rezessive Bits, und andererseits die Flankenerkennung 222. Dies ist üblicherweise gegeben. In anderen Ausführungsbeispielen können andere Mechanismen verwendet werden, welche für die Wiederaufnahme der Kommunikation nach Neustart oder Fehlererkennung dienen, und welche zur Ausführung des erfindungsgemäßen Verfahrens wiederverwendet werden können.

Die gemäß dem hier beschriebenen Beispiel der vorliegenden Erfindung modifizierte CAN FD-Implementierung verwendet nun folgenden Mechanismus: Die modifizierte CAN FD-Implementierung beteiligt sich zunächst wie üblich an der Kommunikation, das heißt sie versucht, sofern eine Nachricht zum Versenden vorliegt, durch Senden des Kopfteils der Nachricht im Rahmen der Arbitirierung Zugriff auf den Bus zu erlangen. Gibt es nichts zu senden, oder verliert sie die Arbitirierung, beobachtet sie den Busverkehr als Empfänger. Unmittelbar nach Erkennen eines rezessiven Bits an der Bitposition r0 in einer CAN FD-Nachricht mit Standard-Format, oder nach Erkennen eines rezessiven Bits an der Bitposition r0 in einer CAN FD-Nachricht mit extended Format (siehe Figuren 1a und 1b) startet die modifizierte CAN FD-Implementierung ihre für die Protokolldekodierung zuständige Zustandsmaschine (Protokollzustandsmaschine) beziehungsweise die dafür vorgesehene Protokollsteuereinheit, beispielsweise ein in Hardware realisiertes Protokollsteuerwerk, neu, ohne ihre Fehler-Zähler zu ändern und ohne einen Error-Frame zu senden. Auf diese Weise nimmt sie einen Protokollausnahmezustand ein, in welchem sie auf das Eintreten einer Wiederaufnahmebedingung wartet. Die Wiederaufnahmebedingung und der dadurch eingeleitete Wiederaufnahmeprozess sehen im Wesentlichen gleich aus, wie schon früher für das erste Ausführungsbeispiel beschrieben. CAN FD-Implementierungen weisen üblicherweise die analogen Mechanismen, also insbesondere einen Zähler 221 für rezessive Bits und eine Flankenerkennung 222, auf, welche hierfür verwendet werden können.

Alternativ kann an Stelle des r0 Bits bei Standard-Format beziehungsweise Extended-Format für die Einleitung des Protokollausnahmezustands auch ein anderes Bit mit festgelegtem Wert innerhalb der CAN FD-Nachricht verwendet werden, wie z.B. das r1 Bit am Ende des Arbitration Field.

Der Vorteil des dargestellten Mechanismus ist, dass so sichergestellt ist, dass die modifizierten CAN FD-Teilnehmer warten, bis die Nachricht gemäß dem weiteren Kommunikationsprotokoll übertragen wurde (oder bis sie gegebenenfalls durch einen entsprechenden Mechanismus unterbrochen wurde, falls ein Fehler erkannt wird). Voraussetzung ist, dass das weitere Kommunikationsprotokoll derart ausgeprägt ist, dass während der Übertragung das Erfordernis einer Folge von elf aufeinanderfolgenden rezessiven Bits nie erfüllt wird und die modifizierten CAN FD-Teilnehmer demnach keinen Wiederaufnahmeprozess durchlaufen, wie er oben beschrieben wurde. So ermöglicht das beschriebene Verfahren, dass die modifizierten CAN FD-Implementierungen die Nachrichten, die gemäß dem weiteren Kommunikationsprotokoll übertragen werden, tolerieren.

## Patentansprüche

1. Verfahren zum Austausch von Daten zwischen Teilnehmern (200, 250), die mittels eines Bussystems (100) miteinander verbunden sind,
wobei Nachrichten, die die Daten enthalten, gemäß einem ersten Kommunikationsprotokoll ausgetauscht werden,
wobei die Nachrichten aus einer Sequenz von Bits bestehen,
wobei wenigstens ein Steuerbit mit einer vorgegebenen Position innerhalb der Nachricht, die gemäß dem ersten Kommunikationsprotokoll ausgetauscht wird, einen vorgegebenen Wert aufweisen muss,
wobei für jede Nachricht ein Teilnehmer die Rolle des Senders innehat und wenigstens ein anderer Teilnehmer als Empfänger die Nachricht empfängt und eine Fehlerüberwachung für die Nachricht durchführt,
**dadurch gekennzeichnet, dass**
bei Vorliegen wenigstens eines Steuerbits mit einem von dem vorgegebenen Wert abweichenden Wert wenigstens ein Empfänger einen Protokollausnahmezustand einnimmt, in dem er die Fehlerüberwachung aussetzt, bis eine Wiederaufnahmebedingung für die Nutzung des ersten Kommunikationsprotokolls erfüllt ist,
wobei als Wiederaufnahmebedingung das Auftreten einer vorgegebenen Anzahl von aufeinander folgenden rezessiven Bits definiert ist,
so dass sichergestellt ist, dass der wenigstens eine Empfänger im Protokollausnahmezustand abwartet, bis die Nachricht übertragen wurde.

2. Verfahren nach Anspruch 1,
**dadurch gekennzeichnet, dass**
das Vorliegen des wenigstens einen Steuerbits mit einem von dem vorgegebenen Wert abweichenden Wert anzeigt, dass der Sender die von ihm übertragene Nachricht unter Nutzung eines abweichenden Kommunikationsprotokolls sendet.

3. Verfahren nach Anspruch 2,
**dadurch gekennzeichnet, dass** das abweichende Kommunikationsprotokoll in einem Teil der übertragenen Nachricht eine gegenüber dem ersten Kommunikationsprotokoll kürzere Bitdauer aufweist.

4. Verfahren nach einem der Ansprüche 1 bis 3,
**dadurch gekennzeichnet, dass**
der wenigstens eine Empfänger den Protokollausnahmezustand einnimmt, indem er einen Neustart einer Protokollsteuereinheit oder einer Protokollzustandsmaschine durchführt.

5. Verfahren nach einem der Ansprüche 1 bis 4,
**dadurch gekennzeichnet, dass**
der wenigstens eine Empfänger nach dem Neustart das Eintreten der Wiederaufnahmebedingung unter Nutzung einer Flankenerkennung (222) und eines Zählers (221) für das Auftreten von Bits mit einem vorgegebenen Wert überwacht, wobei der Zähler bei Auftreten einer Flanke neu gestartet wird.

6. Verfahren nach einem der Ansprüche 1 bis 5,
**dadurch gekennzeichnet, dass**
die gemäß dem ersten Kommunikationsprotokoll zu übertragenden Nachrichten einen Kopfteil, ein Datenfeld und einen Schlussteil aufweisen, wobei die zu übertragenen Daten im Datenfeld enthalten sind und das wenigstens eine Steuerbit im Kopfteil enthalten ist.

7. Verfahren nach Anspruch 6,
**dadurch gekennzeichnet, dass**
die Rollen von Sender und Empfänger unter den Teilnehmern durch ein Arbitrierungsverfahren vergeben werden, wobei anhand einer im Kopfteil der Nachricht enthaltenen Kennung festgelegt wird, welcher Teilnehmer Sendezugriff auf den Bus erhält, wenn mehrere Teilnehmer gleichzeitig versuchen, eine Nachricht zu senden.

8. Verfahren nach Anspruch 7,
**dadurch gekennzeichnet, dass**
das Arbitrierungsverfahren gemäß dem CAN-Standard ISO 11898-1 ausgeführt wird und der Kopfteil der Nachricht ein Start-Of-Frame-Bit, ein Arbitration Field, ein Control Field umfasst und der Schlussteil der Nachricht ein CRC Field, ein Acknowledge Field und ein End-Of-Frame Field aufweist.

9. Vorrichtung zum Austausch von Daten zwischen Teilnehmern, die mittels eines Bussystems miteinander verbunden sind,
die Mittel aufweist, so dass Nachrichten, die die Daten enthalten, gemäß einem ersten Kommunikationsprotokoll ausgetauscht werden,
wobei die Nachrichten aus einer Sequenz von Bits bestehen,
wobei wenigstens ein Steuerbit mit einer vorgegebenen Position innerhalb der Nachricht, die gemäß dem ersten Kommunikationsprotokoll ausgetauscht wird, einen vorgegebenen Wert aufweisen muss,
wobei die Vorrichtung Mittel aufweist, um als Empfänger die Nachricht zu empfangen und eine Fehlerüberwachung für die Nachricht durchzuführen, **dadurch gekennzeichnet, dass**
die Vorrichtung bei Vorliegen wenigstens eines Steuerbits mit einem von dem vorgegebenen Wert abweichenden Wert in einer empfangenen Nachricht einen Protokollausnahmezustand einnimmt, in dem sie die Fehlerüberwachung aussetzt, bis eine Wiederaufnahmebedingung für die Nutzung des ersten Kommunikationsprotokolls erfüllt ist,
wobei als Wiederaufnahmebedingung das Auftreten einer vorgegebenen Anzahl von aufeinander folgenden rezessiven Bits definiert ist,
so dass sichergestellt ist, dass der wenigstens eine Empfänger im Protokollausnahmezustand abwartet, bis die Nachricht übertragen wurde.

10. Vorrichtung nach Anspruch 9,
**dadurch gekennzeichnet, dass**
die Vorrichtung den Protokollausnahmezustand einnimmt, indem sie einen Neustart einer Protokollsteuereinheit oder einer Protokollzustandsmaschine durchführt.

11. Vorrichtung nach einem der Ansprüche 9 bis 10,
**dadurch gekennzeichnet, dass**
zur Feststellung der Wiederaufnahmebedingung Mittel zur Flankenerkennung (222) und ein Zähler (221) für das Auftreten von Bits mit einem vorgegebenen Wert vorgesehen sind, wobei der Zähler bei Auftreten einer Flanke neu gestartet wird.

12. Vorrichtung nach einem der Ansprüche 9 bis 11,
**dadurch gekennzeichnet, dass**
Mittel vorgesehen sind, um eines der Verfahren gemäß Anspruch 1 bis 8 auszuführen.

## Claims

1. Method for interchanging data between subscribers (200, 250) connected to one another by means of a bus system (100),
wherein messages containing the data are interchanged according to a first communication protocol,
wherein the messages consist of a sequence of bits, wherein at least one control bit having a prescribed position within the message interchanged according to the first communication protocol must have a prescribed value,
wherein for each message one subscriber has the role of the transmitter and at least one other subscriber receives the message as a receiver and performs error monitoring for the message,
**characterized in that**
the presence of at least one control bit having a value differing from the prescribed value results in at least one receiver adopting a protocol exception state in which it suspends error monitoring until a resumption condition for use of the first communication protocol is satisfied, wherein the resumption condition defined is the occurrence of a prescribed number of successive recessive bits,
so that there is the assurance that the at least one receiver in the protocol exception state waits until the message has been transmitted.

2. Method according to Claim 1,
**characterized in that**
the presence of the at least one control bit having a value differing from the prescribed value indicates that the transmitter sends the message it transmits using a different communication protocol.

3. Method according to Claim 2,
**characterized in that**
the different communication protocol has a shorter bit duration in a portion of the transmitted message in comparison with the first communication protocol.

4. Method according to one of Claims 1 to 3,
**characterized in that**
the at least one receiver adopts the protocol exception state by performing a restart for a protocol control unit or a protocol state machine.

5. Method according to one of Claims 1 to 4,
**characterized in that**
the at least one receiver, after the restart, monitors the occurrence of the resumption condition by using an edge detection unit (222) and a counter (221) for the occurrence of bits having a prescribed value, the counter being restarted when an edge occurs.

6. Method according to one of Claims 1 to 5,
**characterized in that**
the messages to be transmitted according to the first communication protocol have a header, a data field and a final part, the data to be transmitted being contained in the data field and the at least one control bit being contained in the header.

7. Method according to Claim 6,
**characterized in that**
the roles of transmitter and receiver are allocated among the subscribers by an arbitration method, an identifier contained in the header of the message being used to stipulate which subscriber is provided with transmission access to the bus when multiple subscribers simultaneously attempt to send a message.

8. Method according to Claim 7,
**characterized in that**
the arbitration method is carried out according to the CAN standard ISO 11898-1 and the header of the message comprises a start-of-frame bit, an arbitration field, a control field and the final part of the message has a CRC field, an acknowledge field and an end-of-frame field.

9. Apparatus for interchanging data between subscribers connected to one another by means of a bus system,
which has means so that messages containing the data are interchanged according to a first communication protocol,
wherein the messages consist of a sequence of bits, wherein at least one control bit having a prescribed position within the message interchanged according to the first communication protocol must have a prescribed value,
wherein the apparatus has means in order to receive the message as a receiver and to perform error monitoring for the message,
**characterized in that**
the presence of at least one control bit having a value differing from the prescribed value in a received message results in the apparatus adopting a protocol exception state in which it suspends error monitoring until a resumption condition for use of the first communication protocol is satisfied, wherein the resumption condition defined is the occurrence of a prescribed number of successive recessive bits,
so that there is the assurance that the at least one receiver in the protocol exception state waits until the message has been transmitted.

10. Apparatus according to Claim 9,
**characterized in that**
the apparatus adopts the protocol exception state by performing a restart for a protocol control unit or a protocol state machine.

11. Apparatus according to either of Claims 9 and 10,
**characterized in that**
edge detection means (222) and a counter (221) for the occurrence of bits having a prescribed value are provided for the purpose of detecting the resumption condition, the counter being restarted when an edge occurs.

12. Apparatus according to one of Claims 9 to 11,
**characterized in that**
means are provided in order to carry out one of the methods according to Claims 1 to 8.

## Revendications

1. Procédé d'échange de données entre des noeuds (200, 250) qui sont reliés entre eux au moyen d'un système de bus (100),
des messages qui contiennent les données étant échangés conformément à un premier protocole de communication, les messages se composant d'une séquence de bits,
au moins un bit de commande ayant une position prédéfinie à l'intérieur du message qui est échangé conformément au premier protocole de communication devant présenter une valeur prédéfinie,
pour chaque message, un noeud occupant le rôle de l'émetteur et au moins un autre noeud en tant que récepteur recevant le message et effectuant une surveillance des erreurs pour le message,
**caractérisé en ce que**
en présence d'au moins un bit de commande ayant une valeur différente de la valeur prédéfinie, au moins un récepteur adopte un état d'exception de protocole dans lequel il suspend la surveillance des erreurs jusqu'à ce qu'une condition de reprise pour l'utilisation du premier protocole de communication soit remplie,
la condition de reprise définie étant la survenance d'un nombre prédéfini de bits récessifs successifs,
de sorte qu'il est garanti que l'au moins un récepteur patiente dans l'état d'exception de protocole jusqu'à ce que le message ait été transmis.

2. Procédé selon la revendication 1, **caractérisé en ce que** la présence de l'au moins un bit de commande ayant une valeur différente de la valeur prédéfinie indique que l'émetteur envoie le message transmis par lui en utilisant un protocole de communication différent.

3. Procédé selon la revendication 2, **caractérisé en ce que** le protocole de communication différent présente, dans une partie du message transmis, une durée de bit plus courte par rapport au premier protocole de communication.

4. Procédé selon l'une des revendications 1 à 3, **caractérisé en ce que** l'au moins un récepteur adopte l'état d'exception de protocole dans lequel il effectue un redémarrage d'une unité de commande de protocole ou d'une machine d'état de protocole.

5. Procédé selon l'une des revendications 1 à 4, **caractérisé en ce que** l'au moins un récepteur, après le redémarrage, surveille l'apparition de la condition de reprise en utilisant une détection de front (222) et un compteur (221) de survenance des bits ayant une valeur prédéfinie, le compteur étant redémarré en cas de survenance d'un front.

6. Procédé selon l'une des revendications 1 à 5, **caractérisé en ce que** les messages à transmettre conformément au premier protocole de communication possèdent une partie d'en-tête, un champ de données et une partie de clôture, les données à transmettre étant contenues dans le champ de données et l'au moins un bit de commande étant contenu dans la partie d'en-tête.

7. Procédé selon la revendication 6, **caractérisé en ce que** les rôles de l'émetteur et du récepteur parmi les noeuds sont attribués par un procédé d'arbitrage, un identificateur contenu dans la partie d'en-tête du message servant à définir quel noeud possède un accès d'envoi sur le bus lorsque plusieurs noeuds essaient simultanément d'envoyer un message.

8. Procédé selon la revendication 7, **caractérisé en ce que** le procédé d'arbitrage est mis en oeuvre conformément à la norme CAN ISO 11898-1 et la partie d'en-tête du message comporte un bit de début de trame, un champ d'arbitrage, un champ de commande et la partie de clôture du message possède un champ de CRC, un champ d'accusé de réception et un champ de fin de trame.

9. Dispositif d'échange de données entre des noeuds qui sont reliés entre eux au moyen d'un système de bus, lequel possède des moyens de sorte que des messages qui contiennent des données sont échangés conformément à un premier protocole de communication,
les messages se composant d'une séquence de bits,
au moins un bit de commande ayant une position prédéfinie à l'intérieur du message qui est échangé conformément au premier protocole de communication devant présenter une valeur prédéfinie,
le dispositif possédant des moyens pour recevoir le message en tant que récepteur et effectuer une surveillance des erreurs pour le message,
**caractérisé en ce que**
le dispositif, en présence d'au moins un bit de commande ayant une valeur différente de la valeur prédéfinie dans un message reçu, adoptant un état d'exception de protocole dans lequel il suspend la surveillance des erreurs jusqu'à ce qu'une condition de reprise pour l'utilisation du premier protocole soit remplie,
la condition de reprise définie étant la survenance d'un nombre prédéfini de bits récessifs successifs,
de sorte qu'il est garanti que l'au moins un récepteur patiente dans l'état d'exception de protocole jusqu'à ce que le message ait été transmis.

10. Dispositif selon la revendication 9, **caractérisé en ce que** le dispositif adopte l'état d'exception de protocole dans lequel il effectue un redémarrage d'une unité de commande de protocole ou d'une machine d'état de protocole.

11. Dispositif selon l'une des revendications 9 à 10, **caractérisé en ce que** des moyens servant à la détection de front (222) et un compteur (221) de survenance des bits ayant une valeur prédéfinie sont présents pour la constatation de la condition de reprise, le compteur étant redémarré en cas de survenance d'un front.

12. Dispositif selon l'une des revendications 9 à 11, **caractérisé en ce que** des moyens sont présents pour mettre en oeuvre l'un des procédés selon les revendications 1 à 8.
